# EUROPEAN PATENT APPLICATION

(11) **EP 0 966 160 A1**
(43) Date of publication of application: **22.12.1999**
(21) Application number: 99107691.0
(22) Date of filing: 17.04.1999
(51) Int. Cl.: H04N 5/74, B64D 11/00, H05B 41/28

(54) **Video projector**

(30) Priority: 26.05.1998 JP 360898 U
(71) Applicant: JAMCO CORPORATION, Mitaka-shi, Tokyo 181 (JP)
(72) Inventor: Saito, Takashi, Mitaka, Tokyo (JP)
(74) Representative: TER MEER STEINMEISTER & PARTNER GbR

(57) **Abstract**

A video projector 50 comprises a discharge tube drive means 55 for switching on and off a discharge tube 59 used as the light source, an image processing means 57, and a control apparatus 53 for outputting a process cease signal to the image processing means 57 and outputting a signal to continue lighting the discharge tube for a predetermined time set to the discharge tube drive means 55, when an operation cease signal is outputted. The discharge tube drive means 55 comprises a first circuit 551 for driving the on and off of the discharge tube 59 and a second circuit 553 for driving the first circuit. The second circuit 553 drives the first circuit 551 so that the discharge tube is continuously lighted for a predetermined time after the ceasing of operation.

## Description

### FIELD OF THE INVENTION

The present invention relates to a video projector using a discharge tube as a light source for projecting the image, and particularly, to the improvement in the structure of the video projector related to restarting the projection by the video projector.

### DESCRIPTION OF THE RELATED ART

In a video projector using a discharge tube as the light source, the discharge tube is lighted when the image is to be projected. During such time, the discharge tube generates heat by the discharge action, and the inner pressure of the tube will be raised. Since the temperature of the discharge tube is still high just after it has been turned off, there was a need to cool the discharge tube forcibly by an air-cooling method and the like in order to light the high-temperature discharge tube again.

Accordingly, there was a need to consider the cooling time when restarting the projector.

The conventional projector will now be explained with reference to the drawings.

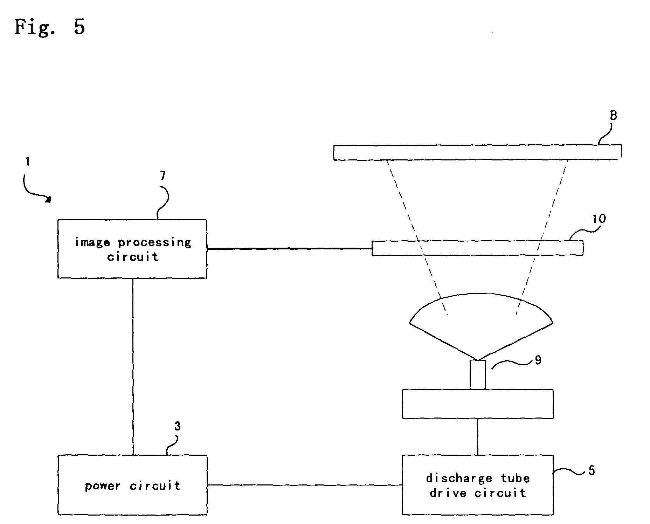

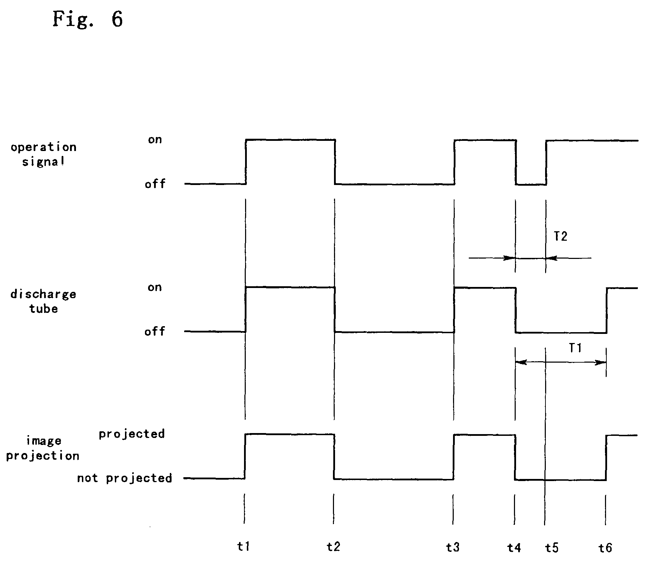

FIG. 5 is an explanatory view of the structure outline of the projector. FIG. 6 shows the operation timing.

When power 3 of a projector 1 is inputted, a discharge tube drive circuit 5 lights a discharge tube. Simultaneously, an image processing circuit 7 is started, and an image is displayed on a liquid crystal panel 10. The image transmitted from the image processing circuit 7 will be projected onto a screen B.

The operation timing shown in FIG. 6 is referred to in explaining how the projector 1 is controlled.

When the operation signal from the control device is turned on at time t1, a drive start signal is outputted to the discharge tube drive circuit 5, and the discharge tube is switched on. Simultaneously, a drive start signal is outputted to the image processing circuit 7, and an image is projected onto a screen B.

When the operation signal is turned off at time t2, an "off" signal is outputted to the discharge tube drive circuit 5, and an "off" signal is also outputted to the image processing circuit 7, thereby ceasing projection of the image at time t2.

Similarly, when the operation signal is outputted at time t3, a drive start signal is outputted to both the discharge tube drive circuit 5 and the image processing circuit 7 simultaneously, the discharge tube 9 is turned on, and the image will be projected to the screen B until the operation signal is turned off at time t4.

In this type of projector, if the cooling time of the discharge tube 9 is set to time T1, then the discharge tube will not be lighted during this time T1. However, when an operation signal is inputted at time t5 before time T1 has passed (time T1 > time T2), then the image processing circuit will be activated and image will be transmitted, but the discharge tube 9 will not be lighted. Therefore, no image will be projected to the screen B. When cooling time T1 has passed, the discharge tube 9 will be lighted at time t6, and the image will be projected to the screen B.

Accordingly, the problem of a projector having a cooling time of the discharge tube 9 set to time T1 is that it will not project any images during time t5 through time t6, in case the projector is restarted at time t5 before the passing of the cooling time T1.

Especially, the operation equipment for controlling a projector mounted inside an airplane may output off signals to the projector when the image source of the projector is switched, for example, from a television camera to a video tape. Such a projector had problems in that it could not display images onto the screen even while the image processing is performed normally, since it took time for the discharge tube to be lighted again.

For example, when projecting a video tape image of safety instructions directly after projecting a television image, the discharge tube having been witched off after the termination of the television image will not be lighted again during the cooling time T1. Therefore, the initial portion of the safety instruction video will not be projected on the screen. For the safety of the passengers during flight, this was very inconvenient.

Moreover, when the projector is restarted before the passing of the cooling time, the operator who is not used to operating such equipment may mistake the state where no image is projected as disorder of the projector. The operator may repeat the switching operation, which causes further confusion.

It was also likely for the operator to consider the projector as having poor quality since it takes time to be restarted. The frequent exchange of projectors caused financial disadvantages.

### SUMMARY OF THE INVENTION

Therefore, the present invention aims at providing a video projector using a discharge tube as the light source to project images, which may be operated without having to consider the cooling time of the discharge tube.

In order to solve the problem, the video projector according to the present invention comprises a discharge tube drive means for switching on and switching off a discharge tube used as a light source, an image processing means, and a control apparatus for outputting a process cease signal to said image processing means and a signal ordering to light said discharge tube continuously for a predetermined time to said discharge tube drive means, when an operation cease signal is inputted.

Further, said discharge tube drive means comprises a first circuit for driving the switching on and switching off of said discharge tube, and a second circuit for driving said first circuit, wherein said second circuit is set to drive said first circuit so as to maintain the "on" state of said discharge tube for a predetermined time after the ceasing of operation.

### BRIEF DESCRIPTION OF THE DRAWINGS

FIG. 1 is an explanatory view showing the structure of the video projector to which the present invention is applied;
FIG. 2 is a timing chart of the video projector to which the present invention is applied;
FIG. 3 is a flowchart of the control apparatus;
FIG. 4 is an explanatory view showing the interior of the airplane;
FIG. 5 is an explanatory view showing the structure of the video projector according to the prior art; and
FIG. 6 is a timing chart of the video projector according to the prior art.

### PREFERRED EMBODIMENT OF THE INVENTION

The preferred embodiment of the present invention will now be explained with reference to the accompanied drawings.

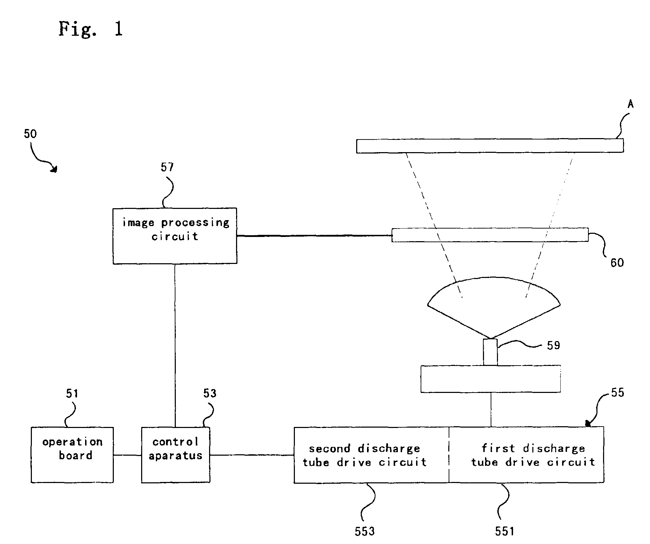

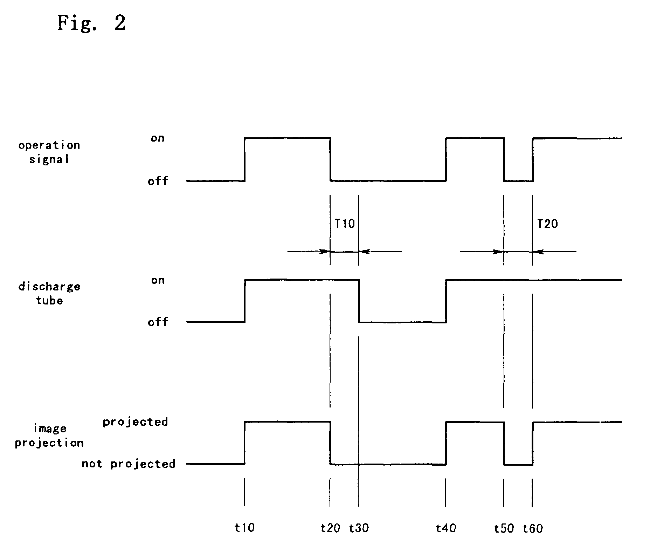

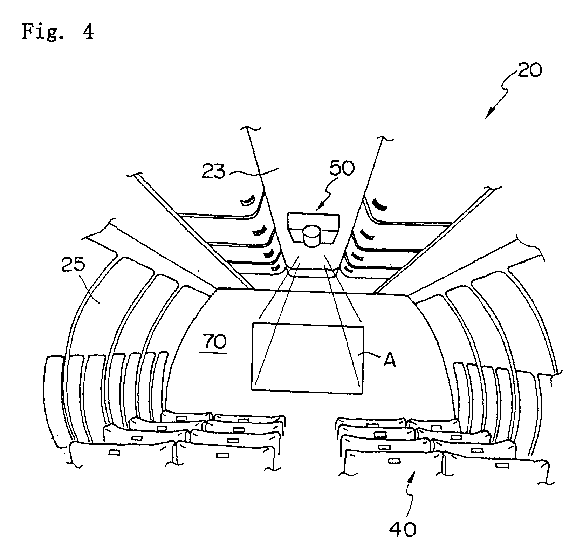

FIG. 1 is a circuit diagram showing the structure of the present invention, FIG. 2 is an explanatory view of the control timing, and FIG. 4 is an explanatory view showing the cabin of an airplane to which the video projector according to the present invention is mounted.

The cabin of an airplane shown as a whole by the reference number 20 is surrounded by a ceiling 23 and side walls 25, and seats 40 are fixed on the floor.

The cabin is divided by partitions 70. A screen 60 is mounted according to need to the partition 70.

A projector 50 is stored to the ceiling of the cabin 20, which will be set to the projecting position when in use. The image projected from the projector 50 according to the operation order of the operator will be displayed on the screen 60 so as to be viewed by the passengers seated at seats 40.

Now, the mechanism of projecting an image by the projector 50 will be explained.

The projector 50 comprises a control apparatus 53 for outputting control signals according to the input of operation signals from an operation board 51, a discharge tube drive circuit 55 to be controlled by the control apparatus 53, and an image processing circuit 57. Further, the discharge tube drive circuit 55 is equipped with a first circuit 551 for switching on and switching off the discharge tube 59, and a second circuit 553 for driving the first circuit 551.

When the operator turns on the projector by operating the operation board 51, the image processing circuit 57 is turned on. Then, the first circuit 551 and the second circuit 553 is turned on, and the image displayed on the liquid crystal panel 60 is projected to the screen A.

When the operator turns off the projector by operating the operation board 51, then the image processing circuit 57 is simultaneously turned off, and the projection of the image to the screen A will be ceased.

At this time, the second circuit 553 of the discharge tube drive circuit 55 is set to maintain the "on" state of the discharge tube 59 for a predetermined time after the "off" order is generated from the operation board 51. That is, for a predetermined time after the "off" signal has been inputted to the control apparatus, for example, during time T10 if the predetermined time is time T10, the second circuit 553 orders the first circuit 551 to maintain lighting the discharge tube 59. When time T10 has passed, the second circuit 553 is turned off, which turns off the first circuit 551, and the discharge tube 59 is switched off.

The projection of an image by the projector 50 to the screen A according to the present invention will be explained with reference to the operation time chart.

When an operation signal is inputted to the control apparatus 53 at time t10, the discharge tube drive circuit 555 is simultaneously turned on, and the discharge tube 59 is switched on. At the same time, the image processing circuit 57 and the liquid crystal panel 60 is activated, and image is projected onto the screen A.

When the operation signal is ceased at time t20, the image processing circuit 57 and the liquid crystal panel 60 is turned off. At that time, no image will be projected onto the screen A, and the display turns black. The second circuit 553 of the discharge tube drive circuit 55 maintains to light the discharge tube 59 through the first circuit 551 until a predetermined time T10 has passed after the ceasing of the operation signal. At time t30 when the predetermined time T10 has passed, the discharge tube 59 will be turned off. Then, the discharge tube 59 will be cooled by the operation of a fan and the like.

Then, after the cleaning time has passed, at time t40, the operation signal is inputted again. Until the operation signal is ceased at time t50, the discharge tube 90 will be switched on, the image processing circuit 57 and the liquid crystal panel 60 is driven, and an image will be projected onto the screen A.

When the operation signal is ceased at time t50, the projection of the image to the screen is terminated, and the screen turns black.

When the operation signal is ceased at time t50, the second circuit 553 of the discharge tube drive circuit 55 continues to light the discharge tube 59 during time T10 which is set in advance.

When the operation signal is inputted again at time t60 after time T20 has passed which is shorter than the predetermined time T10 (time T10 > time T20), the image processing circuit 57 starts to project the image again at time t60. Since the discharge tube 59 is continued to be lighted without being turned off and cooled, the image may be projected to the screen 60 simultaneously when the image processing circuit 57 is turned on.

In this type of projectors, the cooling time of the discharge tube is usually set to approximately 30 seconds. According to the present invention, the time T10 for continuously lighting the discharge tube after the generation of the operation cease signal by the second discharge tube drive circuit is set to approximately 15 seconds.

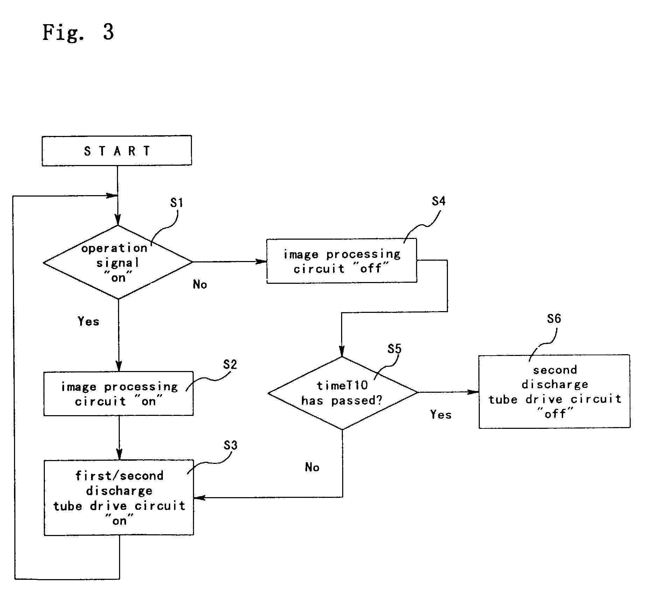

Next, the flowchart of FIG. 3 is referred to in order to explain how the on and off of the discharge tube is controlled.

In step S1, judgement is made on whether the operation signal is inputted or not. When the operation signal is "on", then the image processing circuit is turned on in step S2. In step S3, the discharge tube drive circuit (first and second circuits) is turned on.

When operation is judged to be ceased in step S1, the procedure is advanced to step S4, where the image processing circuit is turned off. Then, in step S5, judgement is made on whether the predetermined length of time T10 has passed or not. When it is judged that the predetermined time has not passed in step S5, then procedure is advanced to step S3, where the output of the drive signals ("on" signals) to the first and second circuits is continued. When an operation signal is inputted in step S1 before the signal showing the elapse of time T10 is inputted in step S5, the procedure is advanced from step S2 to step S3, and the discharge tube is continued to be lighted (turned on).

When the elapse of time T10 is judged in step S5, the procedure is advanced to step S6, where the second circuit of the discharge tube drive circuit is turned off, and the first circuit thereof is also turned off. The discharge tube is switched off.

The video projector being controlled as above will maintain the "on" state of the discharge tube for a predetermined time after the order to turn off the projector is inputted by the operator. When the power of the projector is turned on again during the predetermined time for maintaining the "on" state of the discharge tube, the image may be projected to the screen immediately. Since the discharge tube is continued to be lighted for a predetermined time after the projector has been turned off, the present invention may overcome the problem that the conventional projector had where no image may be projected when restarting the projector shortly after it has been turned off.

The video projector according to the present invention utilizing a discharge tube as a light source is capable of performing image projection without any image defects even when the power of the projector is turned on and off repeatedly by short intervals.

## Claims

1. A video projector comprising a discharge tube drive means for switching on and switching off a discharge tube used as a light source, an image processing means, and a control apparatus for outputting operation control signals to said discharge tube drive means and said image processing means: wherein
when an operation cease signal is inputted, said control apparatus outputs a process cease signal to said image processing means, and further outputs a signal to said discharge tube drive means ordering to continuously light said discharge tube for a predetermined period of time.

2. A video projector according to claim 1, wherein said discharge tube drive means comprises a first circuit for driving the switching on and switching off of said discharge tube and a second circuit for driving said first circuit, and said second circuit drives said first circuit so that said discharge tube is continuously lighted for a predetermined period of time after the ceasing of operation.
